# FASCICULE DE BREVET EUROPEEN

(11) **EP 3 435 195 B1**
(45) Date de publication et mention de la délivrance du brevet: **29.05.2024**
(21) Numéro de dépôt: 17193453.2
(22) Date de dépôt: 27.09.2017
(51) Int. Cl.: G05G 5/06, F16H 1/16, F16H 53/04, H01H 19/62

(54) **SYSTEME DE CAME COMPORTANT AU MOINS UN MODULE MOBILE DE COMMANDE D'UN DISPOSITIF ACTIONNAIRE**
NOCKENSYSTEM, DAS MINDESTENS EIN BEWEGLICHES STEUERMODUL EINER STELLGLIEDVORRICHTUNG UMFASST
CAM SYSTEM COMPRISING AT LEAST ONE MOBILE MODULE FOR CONTROLLING AN ACTUATOR DEVICE

(30) Priorité: 27.07.2017 FR 1757159
(43) Date de publication de la demande: 30.01.2019
(73) Titulaire: Bernard Controls, 95500 Gonesse (FR)
(72) Inventeur: DAJIC, Ivan, 60310 Amy (FR); GUILLAUME, Romain, 79000 Niort (FR)
(74) Mandataire: Berger, Helmut

(56) Documents cités:
- GB-A- 1 459 688
- US-A- 284 860
- US-A- 1 162 693
- US-A- 2 903 528
- US-A- 3 128 638

## Description

L'invention concerne un système de came comportant au moins un module mobile de commande d'un dispositif actionneur, notamment d'un contact électrique, dont la position de fin de course est réglable au moyen d'un dispositif à engrenage.

Des systèmes de ce type, qui sont connus présentent l'inconvénient majeur d'avoir une structure complexe et être d'une manipulation non aisée. US 3 128 638 A décrit un dispositif de commande comprenant une came de synchronisation pour un interrupteur électrique qui permet un réglage précis du moment où l'interrupteur est actionné. Le dispositif comprend une transmission à vis sans fin et un système de blocage de la came.

L'invention a pour but de pallier cet inconvénient.

Pour atteindre ce but, l'invention propose un système de came de commande tel que décrit dans la revendication 1, comprenant notamment un dispositif de base solidaire en rotation d'un arbre rotatif et une came montée réglable en position angulaire sur la base et en ce que le dispositif de réglage comprend une vis sans fin montée sur la base et qui engrène une denture associée à la came afin qu'une rotation de la vis provoque un changement de la position angulaire de la came sur la base.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective d'un système de came selon l'invention, qui comporte quatre modules de came réglable superposés;
- la figure 2 est une vue latérale d'un module de came réglable selon l'invention ;
- la figure 3 est une vue de dessous du module de la figure 2 ;
- les figures 4A et 4B sont des vues en perspective respectivement, de la base de la came, et du dispositif d'engrenage du module de came réglable de la figure 2 ;
- la figure 5 est une vue d'un concept optimisé d'une partie d'un module de came réglable et verrouillable en position, ce concept n'appartient pas à l'invention ;
- les figures 6A et 6B sont des vue en perspective des moyens de verrouillage de la came et des moyens d'indexation du concept de la figure 5; et
- la figure 7 est une vue en perspective d'un mode de réalisation selon l'invention présentant une autre version du module de la figure 5.

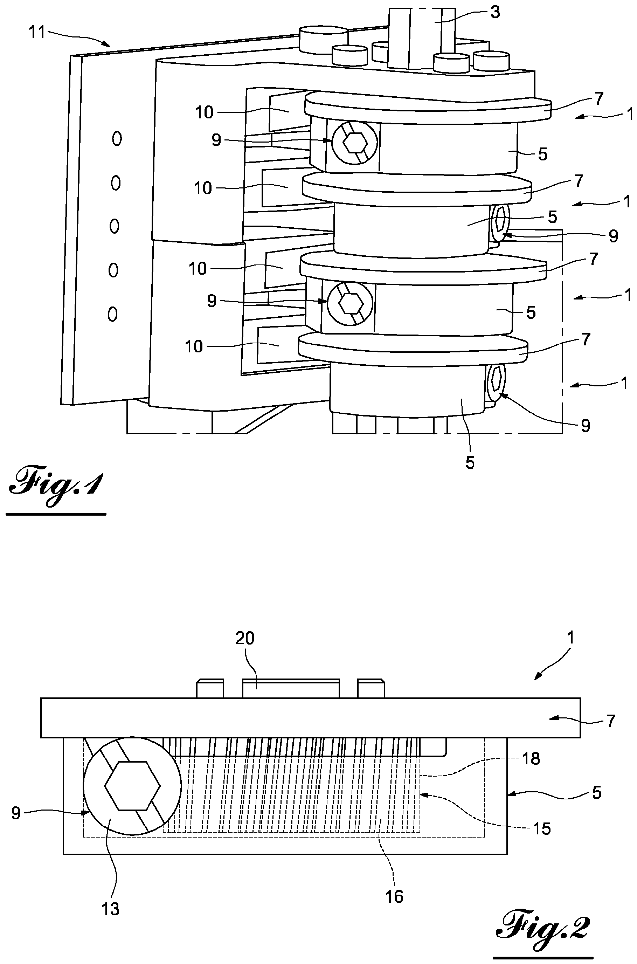

La figure 1 montre, à titre d'exemple non exclusif, un système de quatre modules de came 1 réglable selon l'invention, qui sont empilés sur un même arbre rotatif d'entrainement 3.

Chaque module tel que représenté à la figure 2 comprend une base 5 solidaire en rotation de l'arbre 3 et un disque à came 7 qui est monté sur la base 5 réglable en position angulaire au moyen d'un dispositif à engrenage 9. Chaque disque à came est destiné à commander un contact électrique 10 d'une structure de support extérieure 11. Ce dispositif d'engrenage 9 comprend essentiellement une vis sans fin 13 montée fixe dans la base 5 et s'étendant perpendiculairement à l'arbre 3 et qui engrène une couronne dentée 15 concentrique à l'arbre 3 et solidaire en rotation du disque de came 7. Les dents 16 de la couronne 15 sont légèrement inclinées par rapport à la direction de l'axe de l'arbre 3.

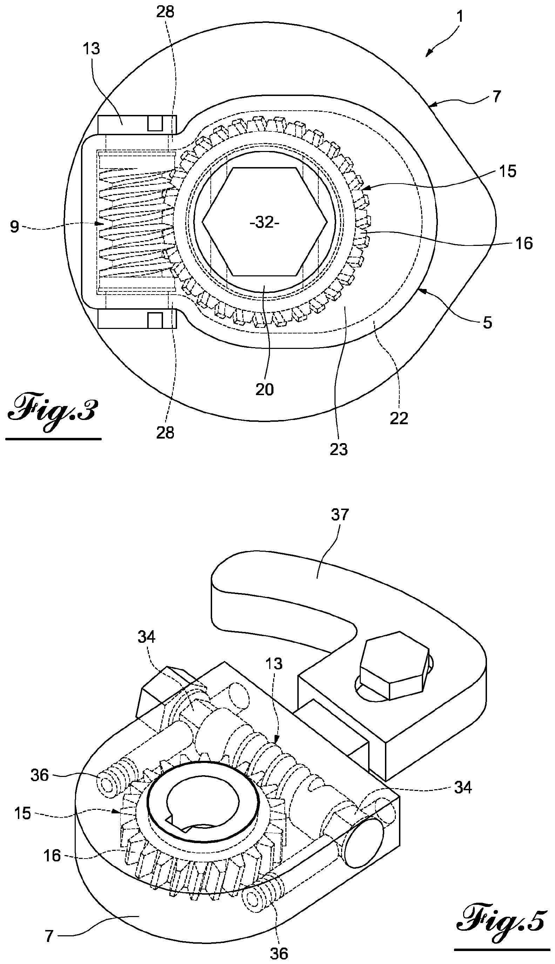

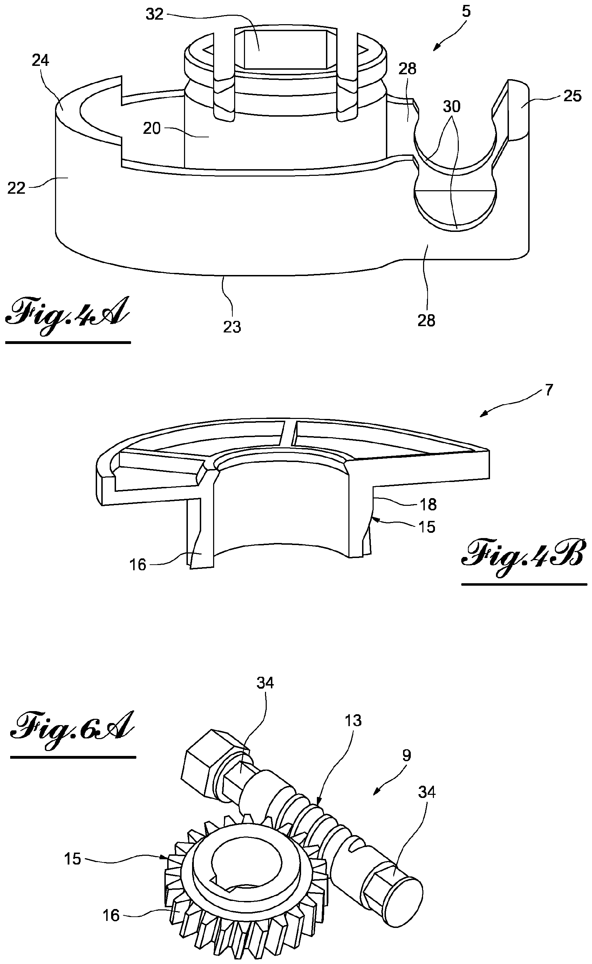

En se reportant notamment aux figures 4A et 4B, on voit que le disque à came 7 comprend un embout cylindrique 18 qui fait saillie perpendiculairement de la surface du disque et est destiné à s'engager sur un embout cylindrique complémentaire 20 de la base 5. La couronne dentée 15 est disposée coaxialement sur l'embout 18 du disque à came 7 en étant solidaire en rotation de celui-ci, comme le montre notamment les figures 2 et 3.

Ainsi la vis sans fin 13 est solidaire de la base 5. La came 7 est en mouvement par rapport à la base 5.

La base 5 est réalisée sous forme d'une cuvette ovale comportant des parois latérales 22 qui s'étendent perpendiculairement à partir du fond 23 comme on le voit sur la figure 2. Dans sa position montée sur la base, le disque prend appui sur le bord supérieur libre de la paroi latérale 22 de la base, plus précisément sur des parties surélevées 24, 25 de cette paroi qui sont situées au niveau des portions opposées par rapport à l'axe et les plus éloignées l'une de l'autre. On constate qu'au niveau de la paroi surélevée 25, la paroi latérale n'est pas arrondie mais présente un profil, dans la vue de dessus, en forme d'un U dont les branches 28 sont parallèles. Dans chacune de ces portions de paroi est pratiquée une découpe 30 en forme d'un arc de cercle. Ces découpes sont destinées à recevoir la vis sans fin 13 qui s'étend, comme indiqué plus haut, perpendiculairement à l'arbre 3 d'entrainement de la base. L'axe de cet arbre est confondu avec l'axe des embouts 18 et 20 respectivement du disque 7 et de la base 5. La position de la vis est choisie de façon qu'elle puisse engrener les dents 16 de la couronne dentée 15 pour qu'une rotation de la vis provoque la rotation de la couronne 15 et ainsi du disque à came 7. Les extrémités de la vis sont, à cette fin, configurées pour permettre un entrainement en rotation de la vis par un outil tel qu'un tournevis. Au moins une extrémité de la vis est à cette fin accessible de l'extérieur. Il est encore à noter que la base est fixée sur l'arbre grâce à par exemple une ouverture non circulaire 32, par exemple hexagonale, dans la paroi de fond 23 de la base.

Grâce à l'inclinaison des filets de la vis et des dents de la couronne, lorsque la came est amenée par rotation de la vis dans une position prédéterminée souhaitée, cette position est assurée par un effet d'auto-blocage lorsque la came est soumise à une force de résistance, c'est-à-dire lorsque la came atteint le contact à actionner.

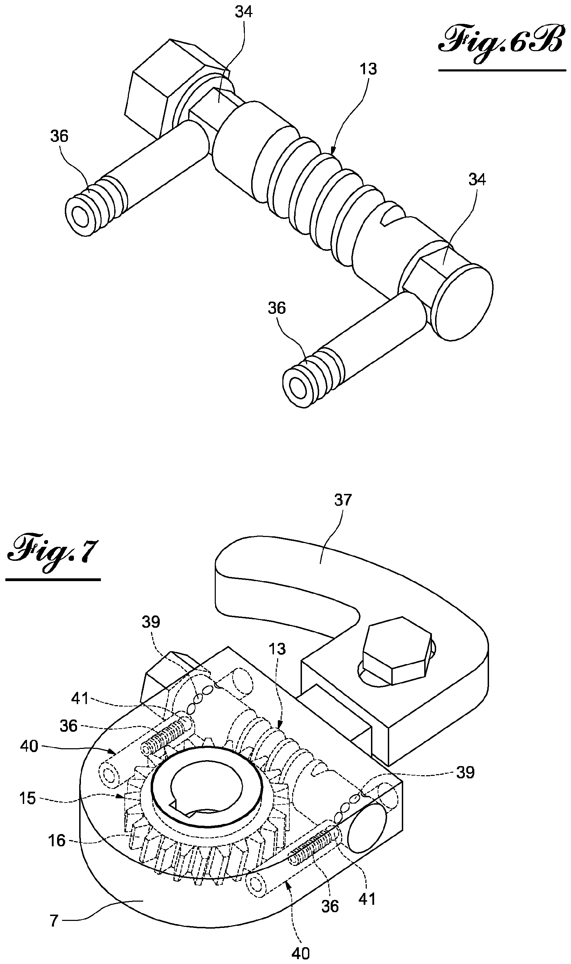

Dans la version de mise en oeuvre d'un exemple de système de came de commande représentée aux figures 5, 6A et 6B, la vis sans fin 13 est solidaire de la came 37, et par contre la couronne dentée 15 est fixe. Cet exemple n'appartient pas à l'objet de l'invention.

Le blocage de la position de la came, après un réglage, est assuré par des moyens de blocage spécifiques illustrés clairement sur la figure 6B. A cette fin, la vis comporte au niveau de chaque extrémité, c'est-à-dire de part et d'autre de la partie filetée, une partie à section transversale multi-pans, par exemple, hexagonale et le module comporte, associé à chacune des deux portions hexagonales 34 un ressort 36 qui prend appui par une extrémité sur un élément de butée (non représenté) de la base et agit par son autre extrémité sur un des six pans de la partie à section hexagonale de la vis. Ainsi, la vis est maintenue dans une position angulaire souhaitée suite à un réglage par rotation de cette vis, par la pression qu'exercent les ressorts sur le pan d'appui. Sur la figure, les pans d'un côté de la partie filetée de la vis sont angulairement décalés de 30° par rapport aux pans de l'autre côté, ce qui procure un blocage et aussi un indexage en 12 positions. Il est à noter, comme mentionné plus haut, que sur la figure 5, la couronne dentée 15 est solidaire en rotation de l'axe 3 et la vis 13 est prévue sur la came 7 qui porte un élément de commande de contact 37.

Conformément à l'invention la figure 7 montre un module conforme à la figure 5, mais pourvu d'une autre version de réalisation des moyens de blocage de la position de la came après un réglage. Dans cette version la vis 13 comprend, de part et d'autre de sa partie filetée une série d'empreintes 39 qui sont pratiquées dans la surface périphérique de la vis et angulairement réparties sur celle-ci. Comme sur la figure 5, les moyens de blocage comportent deux ressorts hélicoïdaux 36, chacun monté dans un élément de maintien 40 et associé à une série d'empreintes et pourvu à son extrémité adjacente à la vis d'un élément sphérique 41 destiné à s'engager amoviblement sous l'effet du ressort dans une empreinte, suite à un réglage de la position de la came. Le cas échéant, en décalant les empreintes des deux séries angulairement, on peut doubler le nombre des positions d'indexage.

Bien entendu, de multiples modifications peuvent être apportées au mode de réalisation de l'invention qui vient d'être décrit à titre d'exemple non limitatif, et toute modification utile peut être apportée à la présente invention sans sortir du cadre de celle-ci tel que défini par les revendications annexées. Ainsi les configurations de la base et de la came avec sa couronne peuvent être différentes, à condition de conserver, comme organe de réglage la vis sans fin ou un organe analogue, qui permet un actionnement facile de l'extérieur.

## Revendications

1. Système de came de commande comportant au moins un module de came mobile de commande d'un dispositif actionneur, notamment d'un contact électrique, dont la position de fin de course est réglable au moyen d'un dispositif à engrenage, le module comprenant une base (5) solidaire en rotation d'un arbre rotatif (3) et une came (7) montée réglable en position angulaire sur la base, et le dispositif à engrenage (9) comprenant une vis sans fin (13) montée sur la base (5) et engrenant une denture (16) associée à la came (7) afin qu'une rotation de la vis provoque un changement de la position angulaire de la came sur la base, cette came (7) étant verrouillable par des moyens de blocage de la vis sans fin dans sa position angulaire correspondante, **caractérisé en ce que**, pour assurer le blocage de la vis sans fin (13), celle-ci comprend des empreintes (39) pratiquées dans sa surface périphérique et angulairement décalées et **en ce que** la vis est bloquée par engagement d'un élément poussoir (36, 41) dans l'une de ces dites empreintes (39).

2. Système selon la revendication précédente, **caractérisé en ce que** l'élément poussoir (36, 41) est formé par un ressort de compression (36) portant à son extrémité adjacente à la vis un élément sphérique (41) destiné à s'engager dans les empreintes (39).

3. Système selon la revendication 1 ou 2, **caractérisé en ce que** la came est réalisée sous forme d'un disque présentant à sa périphérie une partie en forme de came.

4. Système selon l'une des revendications 1 à 3, **caractérisé en ce qu'**il comprend une pluralité de modules de came de commande montée sur un arbre d'entrainement commun (3).

5. Système selon l'une des revendications 1 à 4, **caractérisé en ce que** la vis sans fin (13) est disposée dans la base (5), perpendiculairement à l'arbre (3) d'entrainement en rotation de la base, et engrène une couronne dentée (15) qui est solidaire en rotation de la came (7).

## Patentansprüche

1. Steuernockensystem, umfassend mindestens ein bewegliches Nockenmodul zum Steuern einer Betätigungsvorrichtung, insbesondere eines elektrischen Kontakts, dessen Endlage mittels einer Getriebevorrichtung einstellbar ist, das Modul umfassend eine Basis (5), die drehfest mit einer Drehwelle (3) ist, und eine Nocke (7), die in ihrer Winkelposition einstellbar auf der Basis montiert ist, und die Getriebevorrichtung (9) umfassend eine Schnecke (13), die an der Basis (5) montiert ist und in eine Verzahnung (16) eingreift, die mit der Nocke (7) assoziiert ist, sodass eine Drehung der Schnecke eine Änderung der Winkelposition der Nocke an der Basis bewirkt, wobei diese Nocke (7) durch Blockiereinrichtungen der Schnecke in ihrer entsprechenden Winkelposition verriegelbar ist, **dadurch gekennzeichnet, dass**, um die Blockierung der Schnecke (13) zu gewährleisten, diese Vertiefungen (39) umfasst, die in ihrer Umfangsfläche angefertigt sind und winkelmäßig versetzt sind, und dass die Schnecke durch Eingriff eines Druckelements (36, 41) in eine der genannten Vertiefungen (39) blockiert wird.

2. System nach dem vorhergehenden Anspruch, **dadurch gekennzeichnet, dass** das Drückelement (36, 41) durch eine Druckfeder (36) gebildet ist, die an ihrem der Schnecke benachbarten Ende ein kugelförmiges Element (41) trägt, das dazu bestimmt ist, in die Vertiefungen (39) einzugreifen.

3. System nach Anspruch 1 oder 2, **dadurch gekennzeichnet, dass** die Nocke in Form einer Scheibe ausgeführt ist, die an ihrem Umfang einen nockenförmigen Abschnitt aufweist.

4. System nach einem der Ansprüche 1 bis 3, **dadurch gekennzeichnet, dass** es eine Vielzahl von Steuernockenmodulen umfasst, die auf einer gemeinsamen Antriebswelle (3) montiert sind.

5. System nach einem der Ansprüche 1 bis 4, **dadurch gekennzeichnet, dass** die Schnecke (13) in der Basis (5) senkrecht zu der Welle (3) für einen Drehantrieb der Basis angeordnet ist und in einen Zahnkranz (15) eingreift, der drehfest mit dem Nocken (7) ist.

## Claims

1. A control cam system including at least one moving cam module for controlling an actuator device, in particular an electrical contact, whose end-of-travel position is adjustable using a gear device, the module comprising a base (5) secured in rotation with a rotating shaft (3) and a cam (7) mounted so as to be angularly adjustable in position on the base, and the gear device (9) comprising a worm screw (13) mounted on the base (5) and meshing with teeth (16) associated with the cam (7) so that rotation of the worm screw causes a change in the angular position of the cam on the base, this cam (7) being able to be locked by means for blocking the worm screw in its corresponding angular position, **characterized in that**, to ensure the blocking of the worm screw (13), the latter comprises cavities (39) formed in its peripheral surface and angularly offset, and **in that** the screw is blocked by engagement of a pusher element (36, 41) in one of said cavities (39).

2. The system according to the preceding claim, **characterized in that** the pusher element (36, 41) is formed by a compression spring (36) bearing, at its end adjacent to the screw, a spherical element (41) for engaging in the cavities (39).

3. The system according to claim 1 or 2, **characterized in that** the cam is made in the form of a disc having a cam-shaped part at a periphery of said disc.

4. The system according to one of claims 1 to 3, **characterized in that** it comprises a plurality of control cam modules mounted on a common drive shaft (3).

5. The system according to one of claims 1 to 4, **characterized in that** the worm screw (13) is arranged in the base (5), perpendicular to the shaft (3) for driving the rotation of the base, and meshes with crown gear (15) that are secured in rotation with the cam (7).
